(19) Europäisches Patentamt

European Patent Office

Office européen des brevets

(11) Veröffentlichungsnummer: **0 270 907 B1**

(12) **EUROPÄISCHE PATENTSCHRIFT**

(45) Veröffentlichungstag der Patentschrift: **29.12.93**

(21) Anmeldenummer: **87117284.7**

(22) Anmeldetag: **24.11.87**

Die Akte enthält technische Angaben, die nach dem Eingang der Anmeldung eingereicht wurden und die nicht in dieser Patentschrift enthalten sind.

(51) Int. Cl.⁵: **C08G 18/40**, C08G 18/08

(54) **Hochdehnbare Elasthanfasern mit verbesserten Eigenschaften.**

(30) Priorität: **06.12.86 DE 3641703**

(43) Veröffentlichungstag der Anmeldung:
**15.06.88 Patentblatt 88/24**

(45) Bekanntmachung des Hinweises auf die Patenterteilung:
**29.12.93 Patentblatt 93/52**

(84) Benannte Vertragsstaaten:
**DE ES FR GB IT NL**

(56) Entgegenhaltungen:
**EP-A- 0 199 194**

**CHEMICAL ABSTRACTS, Band 77, Nr. 2, 10. Juli 1972, Seiten 102,103, Zusammenfassung Nr. 7131s, Columbus, Ohio, US; & JP-A-72 00 637**

(73) Patentinhaber: **BAYER AG**

**D-51368 Leverkusen(DE)**

(72) Erfinder: **Kausch, Michael, Dr.**
**Semmelweisstrasse 151**
**D-5000 Köln 80(DE)**
Erfinder: **Süling, Carlhans, Dr.**
**Carl-Leverkus-Strasse 10**
**D-5068 Odenthal(DE)**
Erfinder: **Schröer, Hans, Dr.**
**An der Windmühle 3**
**D-4047 Dormagen(DE)**
Erfinder: **Wolf, Karlheinz, Dr.**
**Pfarrer-Maybaum-Weg 6**
**D-5000 Köln 80(DE)**
Erfinder: **Dauscher, Rudi, Dr.**
**Pommernallee 39**
**D-4047 Dormagen(DE)**
Erfinder: **Gall, Heinz, Dr.**
**Ruhrstrasse 30**
**D-5024 Sinnersdorf(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 270 907 B1

**Beschreibung**

Die Erfindung betrifft hochdehnbare Elasthanfasern (Spandexfasern) auf Basis segmentierter Polyurethan(harnstoff)e mit verbesserten elastischen Eigenschaften und guter Stabilität gegen mikrobiellen Abbau, dadurch gekennzeichnet, daß man zur Synthese der Elasthane Mischungen aus höhermolekularen Copolyesterdiolen mit Molekulargewichten von größer 3.000 bis 4.000 und höhermolekularen Polytetrahydrofurandiolen mit Molekulargewichten von 1.500 bis 3.000 bei der Polyurethan(harnstoff)-Herstellung verwendet.

Unter Elasthanfasern werden Fäden verstanden, die zu mindestens 85 Gew.-% aus segmentierten Polyurethan(harnstoff)en bestehen. Derartige Elasthanfasern werden üblicherweise hergestellt, indem zunächst ein langkettiges Diol (Makrodiol) mit einem Diisocyanat endständig verkappt wird, so daß man ein Makrodiisocyanat (NCO-Prepolymer) erhält. Das NCO-Prepolymer wird dann in einem zweiten Schritt mit einem Kettenverlängerer, welcher üblicherweise aus einem Diamin besteht, zu einem hochmolekularen Polyurethanharnstoff umgesetzt. Diese Polyurethanharnstoffe sind so aufgebaut, daß das Makromolekül eine Segmentstruktur aufweist, d.h. aus kristallinen und amorphen Blöcken (Hartsegmente bzw. Weichsegmente) besteht. Die Hartsegmente wirken dann aufgrund ihrer Kristallinität als Fixpunkte des Netzwerkes und sind damit maßgebend für die Festigkeit der aus den Polymeren hergestellten Formkörper. Die Weichsegmente hingegen, deren Glastemperatur unterhalb der Gebrauchstemperatur liegen muß, sind für die Elastizität der Elastomeren maßgebend. Üblicherweise werden zum Aufbau der Weichsegmente handelsüblicher Elasthanfasern oder -fäden, Polyester- oder Polyetherdiole eingesetzt. Die Molekulargewichte dieser Polyester- oder Polyetherdiole liegen meist in der Größenordnung von 2.000, womit Fäden erzeugt werden können, die Dehnbarkeiten zwischen 360 und 500 % besitzen.

Für besondere Anwendungszwecke, bei denen besonders hohe Dehnbarkeiten erwünscht sind, werden Makrodiole eingesetzt, die höhere Molekulargewichte, bis ca. 4.000 besitzen. Besonders für diese Zwecke geeignet sind Polyesterdiole, da diese, verglichen mit Polyetherdiolen entsprechenden Molekulargewichts, verbesserte elastische Eigenschaften der Fäden ergeben. Ein weiterer Vorteil der Polyesterdiole ist, daß sie mit hohen Molekulargewichten und guter Funktionalität einfacher herzustellen sind als die entsprechenden Polyetherdiole und damit ein preisgünstigerer Elasthanfaden herzustellen ist. Ein Nachteil aller auf Polyesterbasis hergestellter Elastomerer ist jedoch ihre Empfindlichkeit gegen einen Abbau durch Mikroben oder Schimmelpilze. Am besten geeignet für die Elasthanherstellung sind Polyester mit Adipinsäure als Säurekomponente. Um Dehnungskristallisation zu vermeiden und um damit zu hervorragenden elastischen Eigenschaften zu gelangen, setzt man als Diolkomponente am günstigsten Diol-Mischungen ein. Die besten Ergebnisse, auch bezüglich Hydrolysenfestigkeit, werden mit Diolmischungen aus längerkettigen, > C$_4$-Diolen, z.B. Hexandiol-1,6, Butandiol-1,4, Neopentylglykol usw. erzielt.

Um die Tieftemperatureigenschaften von Elasthanfäden zu verbessern, wurden Verfahren beschrieben, in denen Weichsegmente aus Mischungen von Polyester- und Polyetherdiolen zum Einsatz kamen (z.B. GB-PS 1 035 254, BE-PS 633 255 oder DE-A 1 495 035). Die nach diesen Verfahren hergestellten Fäden besitzen jedoch Festigkeiten, die den heutigen Anforderungen an ein gebrauchstüchtiges Elasthan nicht mehr entsprechen.

In der japanischen Patentanmeldung JP-7 200 637 werden Elasthanfasern und Lösungen zu deren Herstellung beschrieben, die unter Verwendung von Polyesterdiolen und Polyetherdiolen jeweils mit einem Molekulargewicht von 700 bis 3.000 hergestellt werden und ein Verhältnis von Polyester- zu Polyetheranteil von 70:30 bis 30:70 aufweisen. Zwar sollen diese Elasthane ein verbessertes elastisches Kälteverhalten gegenüber reinen Polyestern aufweisen, über die Stabilität dieser Elasthane gegenüber mikrobiellem Abbau im Verhältnis zu ihrem Polyesteranteil bei verbesserten elastischen Eigenschaften ist dieser Schrift jedoch nichts zu entnehmen.

In einer weiteren, neueren Anmeldung (JA 59-179 513) wird ebenfalls die Herstellung von Elasthan-Spinnlösungen beschrieben, die Wechsegmente aus Block-Polyester-Polyethern enthalten. Hier wird ausdrücklich darauf hingewiesen, daß mit den dort angegebenen Polyesterether-Mischungen nur dann klare, nicht durch Mikrophasentrennung trübe Spinnlösungen erhalten werden, wenn der Aufbau der Weichsegmente durch ein besonderes, in der Elasthanherstellung sonst unübliches Prepolymerverfahren, in Form von Polyester- und Polyetherblöcken gestaltet wird.

Klare, nicht durch Mikrophasenseparation getrübte Spinnlösungen, sind normalerweise erforderlich, damit bei Lagerung der Lösungen keine Phasenseparation auftreten kann und ein einwandfreies Spinnen möglich ist.

Es wurde nun überraschend gefunden, daß sich homogene, nicht durch Mikrophasenseparation getrübte Elasthan-Spinnlösungen aus Mischungen von Polyester- und Polyetherdiolen nach einfachen Verfahren herstellen lassen, wenn als Polyesterdiole Copolyester aus Adipinsäure und Mischungen aus 2 bis 4

2

verschiedenen, vorzugsweise längerkettigen (≧C₄)-Diolen verwendet werden, die Molekulargewichte von größer 3.000 bis 4.000 sowie einen Schmelzpunkt unter 45°C besitzen und als Polyetherkomponente Polytetrahydrofurandiole mit Molekulargewichten von 1.500 bis 2.500 eingesetzt werden, Ebenfalls überraschend war die Tatsache, daß mit Polyethergehalten unter 40 Gew.-% ein Elasthanfaden erhalten wird, der in seiner Mikrobenstabilität einem reinen Polyetherelasthanfaden gleich kommt. Gleichfalls überraschend war, daß durch diese Zumischung der vergleichsweise niedermolekularen Polytetrahydrofuran-Diole (im Vergleich zu den Polyestern) keine Verschlechterung der für ein Langzugelasthan gewünschten elastischen Eigenschaften beobachtet wird.

Gegenstand der Erfindung sind Elasthanfasern und -fäden aus segmentierten Polyurethan(harnstoff)en, deren Weichsegment aus einer Mischung von Polyesterdiolen und Polyetherdiolen in einem Gewichtsverhältnis von 8,5:1,5 bis 5:5, vorzugsweise 7,5:2,5 bis 6:4, besteht und wobei das Polyesterdiol aus einem Copolyester aus Adipinsäure und einer Mischung von 2 bis 4 verschiedenen, längerkettigen (≧C₄)-Diolen besteht und Molekulargewichte von größer 3.000 bis 4,000, vorzugsweise von größer 3,000 bis 3,500, besitzt und wobei das Polyetherdiol ein Polytetrahydrofurandiol (Polyoxytetramethylendiol) mit Molekulargewichten von 1.500 bis 3.000, vorzugsweise 1.700 bis 2.500, darstellt.

Nach der Methode der Erfindung können mit einem Minimum an Polyetherdiol, dazu noch mit einem relativ preiswerten vom Molekulargewicht 2.000 Elasthanfasern hergestellt werden, die in sich die hervorragenden Eigenschaften eines typischen Polyester-Langzugelasthans mit der guten Mikrobenstabilität eines reinen Polyetherelasthans verbinden.

Besonders geeignete Alkoholkomponenten zur Herstellung der verwendeten Polyesterdiole stellen Hexandiol-1,6, Butandiol-1,4 und Neo-Pentylglykol (2,2-Dimethylpropandiol-1,3) dar. Anstelle eines Diols können auch ε-Caprolacton-Anteile mitverwendet werden.

Die Herstellung der erfindungsgemäßen Polyurethanharnstoffe erfolgt nach bekannten Verfahrensweisen. Besonders geeignet ist der synthetische Aufbau der Faserrohstoffe nach dem Prepolymerverfahren, wobei zunächst Polyester- und Polyetherdiol gemischt werden und anschließend in der Schmelze oder in einem Lösungsmittel mit einem Diisocyanat zu einem Prepolymer so umgesetzt werden, daß das Reaktionsprodukt Isocyanatendgruppen enthält, Die OH/NCO-Verhältnisse werden vorzugsweise zwischen 1:1,7 bis 1:2,5, vorzugsweise 1:1,80 bis 1:2,25, gewählt, wobei die Verhältnisse je nach Molekulargewicht der höhermolekularen Diole so gewählt werden, daß vorzugsweise NCO-Gehalte (berechnet auf NCO-Prepolymer-Feststoff) von 1,7 bis 3,0, vorzugsweise 1,8 bis 2,6 Gew.-% NCO, erhalten werden. Werden Lösungsmittel bei der Prepolymerisation verwendet, so eignen sich hierfür besonders Chlorbenzol, N-Methylpyrrolidon, Dimethylsulfoxid und ganz besonders Dimethylformamid und Dimethylacetamid.

Gegenstand der Erfindung ist auch ein Verfahren zur Herstellung von Elasthanfasern und -fäden, wobei man als Weichsegmente Mischungen aus Polyesterdiolen aus Adipinsäure und einer Mischung von 2 bis 4 verschiedenen, längerkettigen Diolen mit mindestens 4 C-Atomen und mit einem Polyestermolekulargewicht von größer 3000 bis 4.000 sowie einem Schmelzpunkt unter 45°C und Polyoxytetramethylendiolen mit einem Molekulargewicht von 1.500 bis 3.000 im Gewichtsverhältnis von 85:15 bis 50:50 mit Diisocyanaten in Schmelze oder in Lösungsmitteln zu einem NCO-Prepolymer mit 1,7 bis 3,0 Gew.-% NCO (berechnet auf NCO-Prepolymer-Feststoff) umsetzt und dieses in Dimethylsulfoxid-, N-Methylpyrrolidon-, Dimethylacetat oder Dimethylformamid-Lösungen mit Diaminen, gegebenenfalls in Gegenwart monofunktioneller Amine als Kettenabbrecher, in eine hochviskose, verspinnbare Lösung der Elasthane überführt und diese, gegebenenfalls unter Zusatz üblicher Hilfsstoffe, nach Trocken- oder Naßspinnverfahren zu Elasthanfäden verspinnt.

Zusammen mit den Mischungen aus Polyester- und Polyetherdiolen können auch noch kurzkettige, tert.-Aminogruppen enthaltende Diole mit einkondensiert werden.

Bei der Synthese der erfindungsgemäßen Elasthane werden die üblichen aromatischen Diisocyanate gegebenenfalls in Abmischung mit geringen Anteilen von aliphatischen Diisocyanaten, verwendet. Besonders brauchbare Ergebniss werden mit den nachstehenden Diisocyanaten erhalten:
mit 2,4-Toluylendiisocyanat sowie entsprechenden Isomerengemischen, insbesondere aber mit 4,4'-Diphenylmethandiisocyanat bzw. entsprechenden Isomerengemischen mit untergeordneten Mengen an 2,4'- und/oder 2,2'-Isomeren.

Selbstverständlich ist es möglich, Mischungen von aromatischen Diisocyanaten zu verwenden. Als Mischungskomponenten sind weiterhin beispielsweise nachstehende (cyclo)aliphatische Diisocyanate geeignet:
Hexamethylendiisocyanat, Isophorondiisocyanat, Dicyclohexylmethandiisocyanat oder trans-1,4-Cyclohexandiisocyanat.

Eine andere, besonders günstige Ausführungsform der Synthese von erfindungsgemäßen Elasthanrohstoffen besteht darin, Polyester- und Polyetherpolyurethanprepolymere zu mischen und anschließend in bekannter Weise zu Polyharnstoffpolyurethanen umzusetzen.

Bei der Polyharnstoffpolyurethansynthese werden die gewünschten Harnstoffgruppen durch eine Kettenverlängerungsreaktion in die Makromoleküle eingeführt. Üblicherweise werden die in der Prepolymerstufe synthetisierten Makro-diisocyanate in Lösung mit Diaminen umgesetzt, z.B. Ethylendiamin, 1,3-Propylendiamin, Tetramethylendiamin, 1,3-Cyclohexandiamin, Isophorondiamin sowie Gemischen dieser Diamine, insbesondere Gemische mit Ethylendiamin als Hauptkomponente.

Als Lösungsmittel eignen sich polare Lösungsmittel, z.B. Dimethylsulfoxid, N-Methylpyrrolidon und bevorzugt Dimethylformamid oder Dimethylacetamid.

Durch die Verwendung einer geringen Menge an Monoaminen, z.B. Diethylamin oder Dibutylamin, während der Kettenverlängerung kann das gewünschte Molekulargewicht eingestellt werden.

Die Kettenverlängerung selbst kann unter Verwendung von $CO_2$ als Retardierungsmittel ausgeführt werden.

Bei einer Mischung von Polyester- und Polyetherpolyurethanharnstoffen nach Abschluß der Elasthan-Synthese werden bei den verwendeten speziellen Ester-Ether-Kombinationen trübe Spinnlösungen erhalten, so daß dieses Verfahren weniger geeignet ist.

Den erfindungsgemäßen Elasthanspinnlösungen können noch eine Vielzahl von Additiven, die den verschiedensten Zwecken dienen können, zugesetzt werden. Genannt seien z.B. Antioxidantien, Lichtschutzmittel, Schönungsfarbstoffe, Pigmente, Färbenddtive, Antistatika, abhäsiv wirksame Zussätze wie Magnesium-, Calcium-, Lithium, Zink- und/oder Aluminiumstearate, usw.

Die Verspinnung der Lösungen kann sowohl nach dem Naßspinn- oder bevorzugt nach dem Trockenspinnverfahren erfolgen.

Beispiel 1

A) 100 kg eines Polyesters mit endständigen Hydroxylgruppen und einer OH-Zahl von 34,66 (Molekulargewicht 3.231) wurde durch Umsetzung von 54,96 kg Adipinsäure 30,47 kg Hexandiol-1,6 und 14,57 kg Neopentylglykol hergestellt.

b) 12.936 kg des Polyesters nach A) wurden mit 5.544 kg eines Polytetramethylenoxiddiols mit einer OHZ-Zahl von 55,9 (Molekulargewicht 2000-Terathane 2000-Du Pont-Wilmington, USA) und 12.233 kg Dimethylacetamid gemischt und mit 3.221 kg Diphenylmethan,4,4'-diisocyanat versetzt. Anschließend wurde unter Rühren 100 min auf 50-54°C erwärmt, bis der NCO-Gehalt des Prepolymeren 2,22 % betrug.

Eine Mischung aus 327,6 g Ethylendiamin und 8,4 g Diethylamin in 61,44 kg Dimethylacetamid wurde hergestellt und mit 720 g $CO_2$ versetzt. Zu dieser Carbamatsuspension wurden unter intensivem Rühren 30,84 kg der Prepolymerlösung innerhalb von 15 min zugesetzt. Man erhielt eine homogene, klare Elastomerlösung mit einem Feststoffgehalt von 22 Gew.-%, einer Lösungsviskosität von 78 Pa.s/25°C und einer inherenten Viskosität von 1,31 dl/g (5 g/l Dimethylacetamid bei 30°). Zu der viskosen Polymerlösung wurden, bezogen auf PU-Feststoff 2 Gew.-% Titandioxid, Rutil KB-3, BAYER AG), 0,3 Gew.-% Mg-Stearat, 1 Gew.-% Cyanox® 1790, 1 % des Siliconöls Baysilon® M 100 (BAYER-AG, D-5090 Leverkusen) sowie 5 % eines Färbeadditives, das durch Umsetzung von N-Methyldiisopropylamin mit Dicyclohexylmethandiisocyanat im Verhältnis 1:0,99 hergestellt wurde, zugesetzt. Ersetzt man in der vorgehend beschriebenen Spinnlösung das Baysilon M 100 durch 0,5 Gew.-% des Polyethersiloxans Silwet® L 7607, Union Carbide Corporation, USA, erhöht den Mg-Stearat-Zusatz auf 0,5 % und setzt 4 Gew.-% des beschriebenen Färbeadditives zu, so erhält man bei etwas verbesserter Antistik und Verspinnbarkeit Fäden mit gutem Ablaufverhalten und praktisch gleichen textilen Fadenwerten wie für Beispiel 1 beschrieben.

Beispiel 2 (Vergleichsbeispiel zu 1 - Polyesterbasis)

18,0 kg des Polyesters nach Beispiel 1A) wurden mit 11.918 kg Dimethylacetamid gemischt und mit 3.188 kg Diphenylmethan-4,4'-diisocyanat versetzt. Anschließend wurde unter Rühren 90 min auf 50-55° erwärmt, bis der NCO-Gehalt des Prepolymeren 2,49 % betrug.

Eine Mischung aus 369,5 g Ethylendiamin und 18,6 g Diethylamin in 54.578 kg Dimethylacetamid wurde hergestellt und mit 800 g $CO_2$ versetzt. Zu dieser Carbamatsuspension wurden unter intensivem Rühren 33,1 kg der Prepolymerlösung innerhalb von 15 min zugesetzt.

Man erhielt eine homogene, klare Elastomerlösung mit einem Feststoffgehalt von 22 %, einer Lösungsviskosität von 67 Pa.s und einer inherenten Viskosität von 1,20 dl/g (5 g/l Dimethylacetamid bei 30°). Zu dieser viskosen Lösung wurden die gleichen Additive wie in Beispiel 1 angegeben zugesetzt.

4

Beispiel 3 (Vergleichsbeispiel zu 1 - Polyetherbasis)

18,0 kg eines Polytetramethylenoxiddiols mit einer OH-Zahl von 39,0 (Molekulargewicht 2872 - Terathane® 2900-Du Pont, Wilmington, Del., USA) wurden mit 11.843 kg Dimethylacetamid gemischt und mit 3.055 kg Diphenylmethan-4,4'-diisocyanat versetzt.

Anschließend wurde unter Rühren ca. 100 min auf 50° erwärmt bis der NCO-Gehalt des Prepolymeren 2,17 % betrug.

Eine Mischung aus 306,6 g Ethylendiamin und 39,2 g Diethylamin in 60,6 kg Dimethylacetamids wurde hergestellt und mit 700 g $CO_2$ versetzt. Zu dieser Carbamatsuspension wurden unter intensivem Rühren 30,4 kg der Prepolymerlösung innerhalb von 15 min zugesetzt. Man erhielt eine homogene, klare Elastomerlösung mit einem Feststoffgehalt von 22 %, einer Lösungsviskosität von 72 Pa.s/25°C und einer inherenten Viskosität von 1,15 dl/g (5 g/l Dimethylacetamid bei 30°). Zu dieser viskosen Lösung wurden die gleichen Additive in Beispiel 1 angegeben zugesetzt.

Die Verspinnung der Lösungen nach Beispiel 1-3 erfolgte nach dem Trockenspinnverfahren über eine 12-Loch-Düse mit Bohrungen von je 0,2 mm Durchmesser, Schachtheiztemperaturen von 210°, Lufttemperatur 230°, Abzugsgeschwindigkeit 400 m/min. Die Einzelfilamente einer Düsenlochgruppe werden unterhalb des Schachtendes mit Hilfe eines Luftdrallgebers (jet twister) in üblicher Weise zu einem Quasi-Monofilament vereinigt. Die Fäden wurden anschließend mit einem Gemisch von 80 Teilen Baysilon® M 100 und 20 Teilen Baysilon® M 10 präpariert.

Ein Vergleich wichtiger textiler Daten ist in Tabbelle 1 wiedergegeben.

Tabelle 1   Vergleich der elastischen u. mechanischen Prüfwerte der Fäden nach Beispielen 1-3

| Fäden nach | Bsp. 1 Polyester/Polyether | Bsp. 2 (Vergleich) Polyester | Bsp. 3 (Vergleich) Polyether |
|---|---|---|---|
| Substrat | | | |
| Molekulargewicht | 3231 / 2000 | 3231 | 2872 |
| Titer [dtex] | 158 | 152 | 153 |
| Höchstzugkraftdehnung (DIN 53 815) [%] | 528 | 516 | 584 |
| Feinheitsfestigkeit [cN(tex)] (DIN 53 815) | 9,41 | 10,2 | 11,5 |
| Restdehnung [%] *) | 14,3 | 10,2 | 17,0 |
| Ermüdungsverhältnis B1 *) | 0,87 | 0,79 | 0,71 |
| Hystereseverhältnis B6 *) | 0,35 | 0,34 | 0,28 |

*) Meßmethoden: siehe Produktinformation, Bayer-Textilfaser Dorlastan®, Eigenschaften und Einsatzgebiete BAYER AG, Geschäftbereich Fasern, Vertrieb, D-5090 Leverkusen, Stand 1983.

Das Ermüdungsverhältnis B1 ist das Kräfteverhältnis zwischen 5. Belastung bei 300 % Dehnung zu 1. Belastung bei 300 % Dehnung in einem Dehnungspendelexperiment.

Das Hystereseverhältnis B6 ist das Kräfteverhältnis zwischen 5. Entlastung bei 50 % Dehnung und 1. Belastung bei 50 % Dehnung in einem Dehnungspendelexperiment.

Aus der Tabelle 1 wird das überlegene elastische Verhalten (Ermüdungsverhältnis und Hystereseverhältnis) der Fäden nach Beispiel 1 im Vergleich besonders zu den Polyetherelasthanfäden aus Beispiel 3 deutlich.

Beispiel 4

A) 100 kg eines Polyesters mit endständigen Hydroxylgruppen und einer OH-Zahl von 34,08 (Molekulargewicht 3286) wurde durch Umsetzung von 55,38 kg Adipinsäure, 30,78 kg Hexandiol-1,6, 6,42 kg Butandiol-1,4 und 7,42 kg Neopentylglykol durch thermische Veresterung in üblicher Weise hergestellt.

B) 12,936 kg des Polyesters nach 4-A wurden mit 5,544 kg eines Polytetramethylenoxiddiols mit einer OH-Zahl von 55,9 (Molekulargewicht 2000 = Terathane® 2000, Du Pont, Wilmington, Del., USA) und 12,233 kg Dimethylacetamid gemischt und mit 3,281 kg Diphenylmethan-4,4'-diisocyanat versetzt. Anschließend wurde unter Rühren 150 min auf 47° erwärmt, bis der NCO-Gehalt des Prepolymeren 2,48 % betrug.

Eine Mischung 342,97 g Ethylendiamin und 17,03 g Diethylamin in 62,44 kg Dimethylacetamid wurde hergestellt und mit 720 g $CO_2$ versetzt. Zu dieser frisch gebildeten Carbamatsuspension wurden unter intensivem Rühren 31,36 kg der NCO-Prepolymerlösung innerhalb von 15 min zugesetzt. Man erhielt eine homogene, klare Polymerlösung mit einem Feststoffgehalt von 22 %, einer Lösungsviskosität von 80,6 Pa.s/25°C und einer inherenten Viskosität von 1,38 dl/g (5 g/l, Dimethylacetamid bei 30°C). Zu dieser viskosen Polymerlösung wurden, bezogen auf PU-Feststoff, 0,1 Gew.-% Titandioxid (Rutil[?] KB-3, Bayer AG, D-5090 Leverkusen), 0,5 % Mg-Stearat, 0,5 % Siliconöl Silwet® L 7607 (Union Carbode Corporation), 1 Gew.-% Cyanox® 1790 (American Cyanamide, USA), 5 ppm Makrolex®-Violett B (Bayer AG, D-5090 Leverkusen) sowie 4 % eines Färbeadditives, das durch Umsetzung von N-Methyl-diisopropanolamin mit 4,4'-Dicyclohexylmethandiisocyanat im Verhältnis 1:0,99 hergestellt wurde, zugesetzt.

Die Verspinnung der Lösung erfolgte nach dem Trockenspinnverfahren über eine 12-Loch-Düse mit Bohrungen von je 0,3 mm Durchmesser. Schachtheiztemperatur 220°, Lufttemperatur 270°C, Abzugsgeschwindigkeit 400 m/min unter Verwendung eines Luftdrallgebers und Auftragung von etwa 5 Gew.-%, einer für die Verspinnung in Beispiel 1 bis 3 genannten Siliconöl-Mischung (Ergebnisse siehe Tabelle 2).

Beispiel 5 (Vergleichsbeispiel zu Beispiel 4)

18,0 kg des Polyesters nach Beispiel 4A, wurden mit 11,63 kg Dimethylacetamid gemischt und mit 2,67 kg Diphenylmethan-4,4'-diisocyanat versetzt. Anschließend wurde unter Rühren 85 min auf 56°C erwärmt, bis der NCO-Gehalt des Prepolymeren 2,02 Gew.-% betrug. Eine Mischung aus 295,33 g Ethylendiamin und 14,67 g Diethylamin in 62,6 kg Dimethylacetamid wurde hergestellt und mit 720 g $CO_2$ (Trockeneis in kleinstückiger Form) versetzt. Zu dieser Carbamatsuspension wurden unter intensivem Rühren 31,3 kg der NCO-Prepolymerlösung innerhalb von 15 min zugesetzt. Anschließend wurde durch portionsweise Zugabe von insgesamt 15 g Hexamethylen-1,6-diisocyanat die Viskosität auf 115 Pa.s/25°C eingestellt. Man erhielt eine homogene, klare Elastomerlösung mit einem Feststoffgehalt von 22 Gew.-% und einer inherenten Viskosität von 1,47 dl/g (5 g/l Dimethylacetamid bei 30°C). Zu der viskosen Polymerlösung wurden die gleichen Additive wie in Beispiel 4 zugegeben. Die Verspinnung der Lösung erfolgte ebenfalls unter den gleichen Bedingungen wie in Beispiel 4 angegeben (Ergebnisse siehe Tabelle 2).

Beispiel 6 (Vergleichsbeispiel zu 1 - kürzerer Ester)

A) 100 kg eines Polyesters mit endständigen Hydroxylgruppen und einer OH-Zahl von 41,7 (Molekulargewicht 2686) wurde durch Umsetzung von 54,49 kg Adipinsäure, 30,7 kg Hexandiol-1,6 und 14,81 kg Neopentylglykol hergestellt.

B) 3,00 kg des Polyesters nach 6 A wurden mit 886 g Dimethylacetamid gemischt und mit 543 g Diphenylmethan-4,4'-diisocyanat versetzt. Anschließend wurde unter Rühren 95 min auf 52°C erwärmt, bis der NCO-Gehalt des NCO-Prepolymeren 2,19 Gew.-% betrug.

Eine Mischung aus 53,35 g Ethylendiamin und 2,65 g Diethylamin in 10,90 kg Dimethylacetamid wurde hergestellt und mit 120 g Trockeneis versetzt. Zu dieser frisch gebildeten Carbamatsuspension wurden unter intensivem Rühren 4,06 kg der Prepolymerlösung innerhalb von 15 min zugesetzt. Man erhielt eine homogene, klare Elastomerlösung mit einem Feststoffgehalt von 22 Gew.-%, einer Lösungsviskosität von 71 Pa.s/25°C und einer inherenten Viskosität von 1,28 dl/g (5 g/l Dimethylacetamid bei 30°C). Zu der viskosen Polymerlösung wurden, bezogen auf PU-Feststoff, 0,3 Gew.-% Mg-Stearat, 0,5 Gew.-% Siliconöl Silwet® L 7607, 1,0 % Cyanox® 1790 und 0,5 % Tinuvin® 622 (Ciba Geigy, CH, Basel) zugesetzt.

Die Verspinnung erfolgte 4-fädig, wobei jeder Faden aus 6 Einzelfilamenten bestand. Die Düsenbohrung betrug 0,3 mm, Schachtheiztemperatur 190°C, Lufttemperatur 260°C, Abzugsgeschwindigkeit 330 m/min (Ergebnisse siehe Tabelle 2).

T a b e l l e  2  Vergleich der elastischen u. mechanischen Prüfwerte der Fäden nach Beispielen 4-6

Fäden nach

| Substrat | Bsp. 4 Polyester/Polyether | Bsp. 5 (Vergleich) Polyester | Bsp. 6 (Vergleich) |
|---|---|---|---|
| Molekulargewicht | 3286 / 2000 | 3286 | 2686 |
| Titer [dtex] | 167 | 140 | 50 |
| Höchstzug- [%] Kraftdehnung (DIN 53 815) | 564 | 540 | 507 |
| Feinheitsfestigkeit [cN(tex] (DIN 53 815) | 9,71 | 10,1 | 10,6 |
| Restdehnung [%] *) | 14,9 | 12,1 | 14,3 |
| Ermüdungsverhältnis B1 *) | 0,90 | 0,84 | 0,78 |
| Hystereseverhältnis B6 *) | 0,32 | 0,43 | 0,25 |

*) Meßmethoden: siehe Produktinformation, Bayer-Textilfaser Dorlastan®, Eigenschaften und Einsatzgebiete BAYER AG, Geschäftbereich Fasern, Vertrieb, D-5090 Leverkusen, Stand 1983.

Prüfung auf Beständigkeit gegen mikrobiellen Abbau

Hierzu wurden die Fäden nach Beispielen 1-3 zunächst zusammen mit Polyamid zu einer Ware verarbeitet, anschließend einen Blindfärbung unterzogen und dieser Ware 14 Tage in vorkonditionierter

9

EP 0 270 907 B1

Blumenerde vergraben. Danach wurde die Ware entnommen, die Elasthanfäden herauspräpariert und die verbliebene Höchstzugkraft bestimmt. Es ergaben sich folgende Werte:

Tabelle 3

| | Abnahme der Höchstzugkraft (%) |
|---|---|
| Fäden nach Bsp. 1 (erfindungsgemäß) | 16,9 % |
| Fäden nach Bsp. 2 (Vergleich) | zerstört |
| Fäden nach Bsp. 3 (Vergleich) | 1,6 % |
| Fäden nach Beispiel 4 (erfindungsgemäß) | 10,4 % |
| Fäden nach Beispiel 5 (Vergleich) | zerstört |
| Fäden nach Beispiel 6 (Vergleich) | zerstört |

**Patentansprüche**

1. Elasthanfasern und -fäden aus segmentierten Polyurethan(harnstoff)en mit Weichsegmenten aus Mischungen aus Polyesterdiolen und Polyetherdiolen, wobei die Weichsegmente aus einer Mischung von Polyesterdiolen und Polyoxytetramethylendiolen in einem Gewichtsverhältnis von 85:15 bis 50:50 bestehen, und wobei das Polyesterdiol aus einem Copolyesterdiol aus Adipinsäure und einer Mischung von 2 bis 4 verschiedenen, längerkettigen Diolen mit mindestens 4 C-Atomen besteht und ein Molekulargewicht von größer 3.000 bis 4.000, sowie einen Schmelzpunkt unter 45°C besitzt und wobei das Polyetherdiol aus einem Polyoxytetramethylendiol mit einem Molekulargewicht von 1.500 bis 3.000 besteht.

2. Elasthanfasern und -fäden nach Anspruch 1, wobei die Mischung der Polyester zu Polyether in einem Gewichtsverhältnis von 75:25 bis 60:40 besteht.

3. Elasthanfasern und -fäden nach Ansprüchen 1 und 2, wobei das Molekulargewicht der Polyesterdiole größer 3.000 bis 3.500 beträgt und die Polyetherdiole auf Basis Adipinsäure, Hexandiol-1,6 und Neopentylglycol aufgebaut sind und die Polyetherdiole aus Polyoxytetramethylendiolen mit einem Molekulargewicht von 1.700 bis 2.500 bestehen.

4. Verfahren zur Herstellung von Elasthanfasern und -fäden aus segmentierten Polyurethan (harnstoff)en, wobei man als Weichsegmente Mischungen aus Polyesterdiolen aus Adipinsäure und einer Mischung von 2 bis 4 verschiedenen, längerkettigen Diolen mit mindestens 4 C-Atomen und einem Polyestermolekulargewicht von größer 3000 bis 4.000 sowie einem Schmelzpunkt unter 45°C und Polyoxytetramethylendiolen mit einem Molekulargewicht von 1.500 bis 3.000 im Gewichtsverhältnis von 85:15 bis 50:50 mit Diisocyanaten in Schmelze oder in Lösungsmitteln zu einem NCO-Prepolymer mit 1,7 bis 3,0 Gew.-% NCO (berechnet auf NCO-Prepolymer-Feststoff) umsetzt und dieses in Dimethylsulfoxid-, N-Methylpyrrolidon-, Dimethylacetat oder Dimethylformamid-Lösungen mit Diaminen, gegebenenfalls in Gegenwart monofunktioneller Amine als Kettenabbrecher, in eine hochviskose, verspinnbare Lösung der Elasthane überführt und diese, gegebenenfalls unter Zusatz üblicher Hilfsstoffe, nach Trocken- oder Naßspinnverfahren zu Elasthanfäden verspinnt.

5. Verfahren nach Anspruch 4, wobei die Mischung der Polyesterdiole zu den Polyoxytetramethylendiolen in einem Gewichtsverhältnis von 75:25 bis 60:40 vorliegt.

6. Verfahren nach Ansprüchen 4 und 5, wobei die Molekulargewichte der Polyesterdiole größer 3000 bis 3.500 betragen und die Polyesterdiole auf Basis Adipinsäure, Hexandiol-1,6 und Neopentylglycol aufgebaut sind und die Polyoxytetramethylendiole ein Molekulargewicht von 1.700 bis 2.500 aufweisen.

**Claims**

1. Elastane fibres and filaments of segmented polyurethane(ureas) containing soft segments of mixtures of polyester diols and polyether diols, the soft segments consisting of a mixture of polyester diols and polyoxytetramethylene diols in a ratio by weight of 85:15 to 50:50 and the polyester diol consisting of a

10

copolyester diol of adipic acid and a mixture of 2 to 4 different relatively long-chain diols containing at least 4 C atoms and having a molecular weight above 3,000 to 4,000 and a melting point below 45°C and the polyether diol consisting of a polyoxytetramethylene diol having a molecular weight of 1,500 to 3,000.

2.  Elastane fibres and filaments as claimed in claim 1, the mixture of polyester and polyether having a ratio by weight of 75:25 to 60:40.

3.  Elastane fibres and filaments as claimed in claims 1 and 2, the molecular weight of the polyester diols being greater than 3,000 to 3,500 and the polyether diols being based on adipic acid, hexane-1,6-diol and neopentyl glycol and the polyether diols consisting of polyoxytetramethylene diols having a molecular weight of 1,700 to 2,500.

4.  A process for the production of elastane fibres and filaments of segmented polyurethane(urea)s, characterized in that mixtures of polyester diols of adipic acid and a mixture of 2 to 4 different relatively long-chain diols containing at least 4 carbon atoms and having a polyester molecular weight above 3,000 to 4,000 and a melting point below 45°C and polyoxytetramethylene diols having a molecular weight of 1,500 to 3,000 in a ratio by weight of 85:15 to 50:50 are reacted as soft segments with diisocyanates in the melt or in solvents to form an NCO prepolymer containing 1.7 to 3.0% by weight NCO (based on NCO prepolymer solids) and the NCO prepolymer thus formed is converted into a highly viscous spinnable solution of the elastanes in dimethyl sulfoxide, N-methylpyrrolidone, dimethyl acetate or dimethyl formamide solutions with diamines, optionally in the presence of monofunctional amines as chain terminators, and the resulting solution is wet spun or dry spun to elastane filaments, optionally with addition of typical auxiliaries.

5.  A process as claimed in claim 4, characterized in that the mixture of the polyester diols with the polyoxytetramethylene diols has a ratio by weight of 75:25 to 60:40.

6.  A process as claimed in claims 4 and 5, characterized in that the molecular weight of the polyester diols is greater than 3,000 to 3,500 and the polyester diols are based on adipic acid, hexane-1,6-diol and neopentyl glycol and the polyoxytetramethylene diols have a molecular weight of 1,700 to 2,500.

**Revendications**

1.  Fibres et fils d'élasthane formés de polyuréthanne(urées) segmentées comprenant des segments souples formés de mélanges de polyesterdiols et de polyétherdiols, les segments souples étant constitués d'un mélange de polyesterdiols et de polyoxytétraméthylènediols dans un rapport en poids de 85:15 à 50:50 et le polyesterdiol étant constitué d'un copolyesterdiol d'acide adipique et d'un mélange de 2 à 4 diols différents à plus longue chaîne, ayant au moins 4 atomes de carbone, et possédant un poids moléculaire supérieur à 3000-4000, ainsi qu'un point de fusion inférieur à 45°C et le polyétherdiol étant constitué d'un polyoxytétraméthylènediol ayant un poids moléculaire de 1500 à 3000.

2.  Fibres et fils d'élasthane suivant la revendication 1, dans lesquels le mélange des polyesters au polyéther est dans un rapport en poids de 75:25 à 60:40.

3.  Fibres et fils d'élasthane suivant les revendications 1 et 2, dans lesquels le poids moléculaire des polyesterdiols est supérieur à 3000-3500 et les polyétherdiols sont édifiés à base d'acide adipique, d'hexanediol-1,6 et de néopentylglycol et les polyétherdiols sont constitués de polyoxytétraméthylènediols ayant un poids moléculaire de 1700 à 2500.

4.  Procédé de production de fibres et de fils d'élasthane à partir de polyuréthanne(urées) segmentées, dans lequel on fait réagir comme segments souples des mélanges de polyesterdiols d'acide adipique et d'un mélange de 2 à 4 diols différents à chaîne plus longue ayant au moins 4 atomes de carbone et ayant un poids moléculaire de polyester de plus de 3000 à 4000 ainsi qu'un point de fusion inférieur à 45°C, et de polyoxytétraméthylènediols ayant un poids moléculaire de 1500 à 3000 dans un rapport en poids de 85:15 à 50:50 avec des diisocyanates à l'état fondu ou dans des solvants pour former un NCO-prépolymère contenant 1,7 à 3,0 % en poids de groupes NCO (calculés sur base solide du NCO-prépolymère) et on convertit ce dernier dissous dans du diméthylsulfoxyde, de la N-méthylpyrrolidone, du diméthylacétate ou du diméthylformamide avec des diamines, le cas échant en présence d'amines monofonctionnelles comme agents d'allongement de chaînes, en une solution très visqueuse des élasthanes pouvant être filée et on file cette solution en fils d'élasthane, le cas échéant avec addition de substances auxiliaires classiques, par le procédé de filage par voie sèche ou par voie humide.

5. Procédé suivant la revendication 4, dans lequel le mélange de polyesterdiols et de polyoxytétraméthylènediols est dans un rapport en poids de 75:25 à 60:40.

6. Procédé suivant les revendications 4 et 5, dans lequel les poids moléculaires des polyesterdiols vont de plus de 3000 à 3500 et les polyesterdiols sont édifiés à base d'acide adipique, d'hexanediol-1,6 et de néopentylglycol et les polyoxytétraméthylènediols présentent un poids moléculaire de 1700 à 2500.